# EUROPEAN PATENT APPLICATION

(11) **EP 2 566 268 A1**
(43) Date of publication of application: **06.03.2013**
(21) Application number: 11774865.7
(22) Date of filing: 19.04.2011
(51) Int. Cl.: H04W 72/04, H04W 16/32, H04W 84/10

(54) **WIRELESS COMMUNICATION SYSTEM, RADIO BASE STATION, RADIO TERMINAL, AND WIRELESS COMMUNICATION METHOD**

(30) Priority: 28.04.2010 JP 2010103645
(71) Applicant: Kyocera Corporation, Kyoto-shi Kyoto 612-8501 (JP)
(72) Inventor: OKINO, Kenta, Kyoto-shi Kyoto 612-8501 (JP); YAMAZAKI, Chiharu, Kyoto-shi Kyoto 612-8501 (JP)
(74) Representative: Schwabe - Sandmair - Marx
(86) International application number: PCT/JP2011/059611
(87) International publication number: WO 2011/136082

(57) **Abstract**

A macro-cell base station (MeNB) transmits, via a PDCCH in a first subframe, both allocation information indicating a radio resource allocated to a radio terminal (MUE) and subframe information indicating a second subframe which is later than the first subframe and in which an allocation is applied in accordance with the allocation information. The radio terminal (MUE) receives the allocation information and the subframe information from the macro-cell base station (MeNB) via the PDCCH in the first subframe. The macro-cell base station (MeNB) omits the transmission of the allocation information in the second subframe, while the reception unit on the terminal side omits the reception of the allocation information in the second subframe.

## Description

### TECHNICAL FIELD

The present invention relates to a radio communication system, a radio base station, a radio terminal, and a radio communication method in which allocation information is transmitted through a downlink control channel.

### BACKGROUND ART

As next-generation systems which implement communication at higher speed and larger capacity than the currently operated 3rd and 3.5th generation cellular communication systems, an LTE (Long Term Evolution) and an LTE Advanced that is an advanced version of LTE are standardized by a standardization organization named the 3GPP. In the LTE system (including the LTE Advanced), a radio base station transmits allocation information indicating radio resources allocated to a radio terminal through a downlink control channel (PDCCH: Physical Downlink Control Channel).

In the LTE Advanced, provision of a heterogeneous network is under consideration in which high power base stations (so-called macro-cell base station) and low power base stations (so-called pico-cell base station, femtocell base station, or the like) both exist. The heterogeneous network allows a load of the high power base station to be distributed to the low power base station.

Radio terminals are generally connected to a radio base station providing a radio signal with the highest received power among multiple radio base stations. Accordingly, in the heterogeneous network, there is a less possibility that the radio terminal is connected to a low power base station. In view of the circumstances, proposed is a method in which even when the received power from a low power base station is not the highest, the radio terminal is controlled to connect to the low power base station, and thereby the coverage (in other words, the communication area range) of the low power base station is expanded (for example, see Non-Patent Document 1).

### Citation List

### Non-Patent Document

Non-Patent Document 1: 3GPP R1-093433 "Importance of Serving Cell Selection in Heterogeneous Networks", February, 2010.

### DISCLOSURE OF THE INVENTION

Since there is an overlap in frequency band of downlink control channel between radio base stations, the downlink control channel used by one of two neighboring radio base stations receives interference from the downlink control channel used by the other radio base station. Accordingly, a radio terminal may fail to normally receive allocation information through the downlink control channel of the one radio base station. If a radio terminal cannot normally receive allocation information from a radio base station, the radio terminal cannot identify radio resources allocated to the terminal itself, which prevents continuous radio communication with the radio base station.

In particular, in the method of expanding the coverage of a low power base station in the heterogeneous network, the downlink control channel used by a low power base station is highly likely to receive interference from the downlink control channel used by a high power base station. Accordingly, the abovementioned problem is more serious.

Therefore, an objective of the present invention is to provide a radio communication system, a radio base station, a radio terminal, and a radio communication method which are capable of reducing inter-base station interference in a downlink control channel.

In order to solve the problem described above, the present invention has features below.

First of all, a feature of a radio communication system according to the present invention is summarized as follows. A radio communication system configured to allow a radio base station (e.g. macro-cell radio base station MeNB) and a radio terminal (e.g. radio terminal MUE) to perform radio communication with each other using a communication frame configuration in which sub frames are arranged in a time domain, wherein the radio base station comprises a base station side transmission processor (e.g. radio communication unit 210, allocation information generation unit 223, subframe information generation unit 224) configured to transmit allocation information and subframe information through a downlink control channel in a first subframe (e.g. subframe SF#A), the allocation information indicating a radio resource (e.g. resource blocks) allocated to the radio terminal, the subframe information indicating a second subframe (e.g. subframe SF#B) which is a subframe subsequent to the first subframe and to which allocation in accordance with the allocation information is applied, through a downlink control channel, the radio terminal comprises: a terminal side reception processor (e. g. radio communication unit 310, information decoding unit 321) capable of receiving the allocation information and the subframe information from the radio base station through the downlink control channel in the first subframe; and a resource identification unit (e.g. resource identification unit 322) configured to identify a radio resource allocated to each of the first subframe and the second subframe, based on the allocation information and the subframe information received by the terminal side reception processor, wherein the terminal side reception processor omits reception processing of the allocation information in the second subframe when the subframe information is received.

According to the feature, one piece of allocation information can be applied to multiple subframes. Thisleads to omission of transmission/reception of the allocation information between the radio base station and the radio terminal in the second subframe. Accordingly, the neighboring base station of the radio base station receives decreased interference from the downlink control channel of the radio base station, in the second subframe. As a result, the inter-base station interference of the downlink control channel can be reduced.

Another feature of the radio communication system according to the present invention is summarized as follows. In the radio communication system according to the aforementioned feature, the base station side transmission processor omits transmission processing of the allocation information in the second subframe.

Another feature of the radio communication system according to the present invention is summarized as follows. In the radio communication system according to the aforementioned feature, the second subframe includes a subframe next to the first subframe.

Another feature of the radio communication system according to the present invention is summarized as follows. The radio communication system according to the aforementioned feature further comprises a neighboring base station (e.g. pico-cell base station PeNB) that is another radio base station located around the radio base station, wherein the neighboring base station comprises a designation information transmitter (e.g. designation information generation unit 123, X2 interface communication unit 140) configured to transmit designation information for designating the second subframe to the radio base station through inter-base station communication, the radio base station further comprises a designation information receiver (e.g. X2 interface communication unit 140) configured to receive the designation information through the inter-base station communication, and the base station side transmission processor transmits the subframe information indicating the second subframe that is designated in the designation information and is received by the designation information receiver.

Another feature of the radio communication system according to the present invention is summarized as follows. In the radio communication system according to the aforementioned feature, the neighboring base station further comprises: a detection unit (e.g. degraded terminal detection unit 122) configured to detect a degraded radio terminal from radio terminals (e.g. radio terminals PUE) connected to the neighboring base station, the degraded radio terminal being in a degraded radio state due to interference from the radio base station; and a neighboring side transmission processor (e.g. radio communication unit 110) configured to transmit neighboring side allocation information in the second subframe through the downlink control channel, the neighboring side allocation information indicating a radio resource allocated to the degraded radio terminal.

Another feature of the radio communication system according to the present invention is summarized as follows. In the radio communication system according to the aforementioned feature, when the detection unit detects the degraded radio terminal, the designation information transmitter transmits the designation information to the radio base station through the inter-base station communication.

Another feature of the radio communication system according to the present invention is summarized as follows. In the radio communication system according to the aforementioned feature, when transmitting the neighboring side allocation information in the second subframe, the neighboring side transmission processor transmits neighboring side subframe information indicating a third subframe (e.g. subframe SF#C) that is a subframe subsequent to the second subframe and to which allocation in accordance with the neighboring side allocation information is applied.

Another feature of the radio communication system according to the present invention is summarized as follows. In the radio communication system according to the aforementioned feature, in a case of using a carrier aggregation technology in which multiple component carriers having different frequency bands are aggregated and used, the subframe information is used to designate a component carrier.

A feature of a radio base station according to the present invention is summarized as follows. A radio base station (e.g. macro-cell base station MeNB) configured to perform radio communication with a radio terminal (e.g. radio terminal MUE) using a communication frame configuration in which subframes are arranged in the time domain, comprises a base station side transmission processor (e.g. radio communication unit 210, allocation information generation unit 223, subframe information generation unit 224) configured to transmit allocation information and subframe information in a first subframe through a downlink control channel, the allocation information indicating radio resources allocated to the radio terminal, the subframe information indicating a second subframe which is a subframe subsequent to the first subframe and to which allocation in accordance with the allocation information is applied.

A feature of a radio terminal according to the present invention is summarized as follows. A radio terminal (e.g. radio terminal MUE) configured to perform radio communication with a radio base station (e.g. macro-cell base station MeNB) using a communication frame configuration in which subframes are arranged in the time domain, comprises a terminal side reception processor (e.g. radio communication unit 310, information decoding unit 321) capable of receiving allocation information and subframe information in a first subframe through a downlink control channel, the allocation information indicating a radio resource allocated by the radio base station, the subframe information indicating a second subframe which is a subframe subsequent to the first subframe and to which allocation in accordance with the allocation information is applied, wherein the terminal side reception processor omits reception processing of the allocation information in the second subframe when the subframe information is received.

A feature of a radio base station according to the present invention is summarized as follows. A radio base station (e.g. pico-cell base station PeNB) configured to perform radio communication with a radio terminal (e.g. radio terminal PUE) using a communication frame configuration in which subframes are arranged in the time domain, comprises a designation information transmitter (e.g. designation information generation unit 123, X2 interface communication unit 140) configured to transmit designation information to another radio base station through inter-base station communication, the designation information being for designating a second subframe which is a subframe subsequent to a first subframe and to which allocation in accordance with allocation information for the first subframe is applied.

A feature of a radio communication method according to the present invention is summarized as follows. A radio communication method for performing radio communication between a radio base station and a radio terminal using a communication frame configuration in which subframes are arranged in the time domain, comprises the steps of: transmitting allocation information and subframe information by the radio base station in a first subframe through a downlink control channel, the allocation information indicating a radio resource allocated to the radio terminal, the subframe information indicating a second subframe which is a subframe subsequent to the first subframe and to which allocation in accordance with the allocation information is applied; receiving the allocation information and the subframe information from the radio base station by the radio terminal in the first subframe through the downlink control channel; and omitting reception processing of the allocation information in the second subframe by the radio terminal based on the received subframe information.

According to the present invention, it is possible to provide a radio communication system, a radio base station, a radio terminal, and a radio communication method in which inter-base station interference in a downlink control channel can be reduced.

### BRIEF DESCRIPTION OF DRAWINGS

[Fig. 1] Fig. 1 is a diagram for explaining an overview of an LTE system according to a first embodiment to a third embodiment.
[Fig. 2] Fig. 2(a) isa frame configuration diagram indicating a communication frame configuration when an FDD system is used, and Fig. 2 (b) is a diagram illustrating a configuration of a subframe in a downlink.
[Fig. 3] Fig. 3 is a schematic configuration diagram of a radio communication system according to the first embodiment and the second embodiment.
[Fig. 4] Fig. 4 is a block diagram illustrating a configuration of a pico-cell base station according to the first embodiment.
[Fig. 5] Fig. 5 is a block diagram illustrating a configuration of a macro-cell base station according to the first embodiment and the second embodiment.
[Fig. 6] Fig. 6 is a block diagram illustrating a configuration of a radio terminal according to the first embodiment and the second embodiment.
[Fig. 7] Fig. 7 is a diagram for explaining concrete examples of a PDCCH interference management according to the first embodiment.
[Fig. 8] Fig. 8 is an operation sequence diagram illustrating an operation example of the radio communication system according to the first embodiment.
[Fig. 9] Fig. 9 is a block diagram illustrating a configuration of a pico-cell base station according to the second embodiment.
[Fig. 10] Fig. 10 is a block diagram illustrating a configuration of a radio terminal according to the second embodiment.
[Fig. 11] Fig. 11 is a diagram for explaining a concrete example of a PDCCH interference management according to the second embodiment.
[Fig. 12] Fig. 12 is an operation sequence diagram illustrating an operation example of the radio communication system according to the second embodiment.
[Fig. 13] Fig. 13 is a schematic configuration diagram of a radio communication system according to the third embodiment.
[Fig. 14] Fig. 14 is a diagram for explaining a case where a carrier aggregation technology is applied according to other embodiments.

### DESCRIPTION OF THE EMBODIMENTS

First embodiment to third embodiment and other embodiments of the present invention will be described with reference to the drawings. The same or similar portions are designated by the same or similar reference numerals in the drawings of the embodiments below.

### [Overview of LTE System]

Prior to explanations of the first embodiment to the third embodiment, an overview of an LTE system will be described in terms of contents thereof related to the first embodiment to third embodiment.

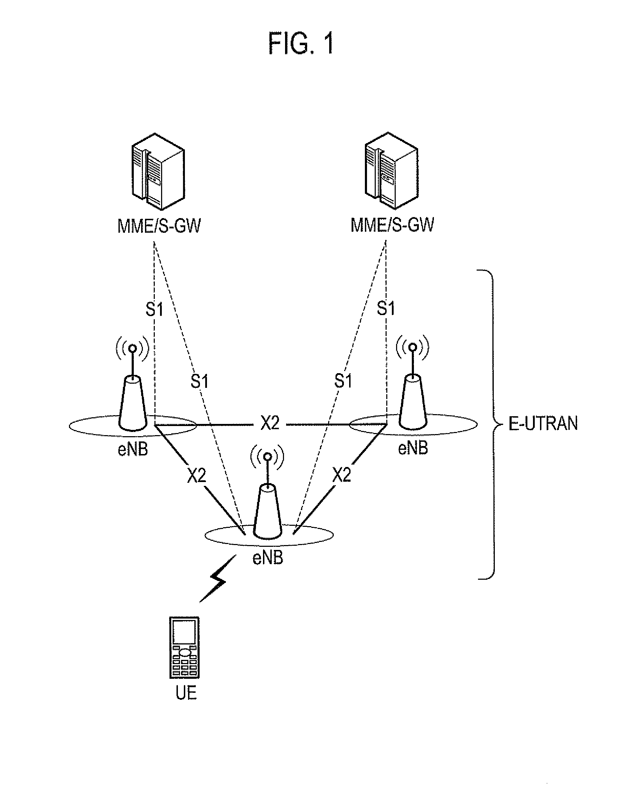

Fig. 1 is a diagram for explaining an overview of an LTE system. As shown in Fig. 1, multiple radio base stations eNBs form an E-UTRAN (Evolved-UMTS Terrestrial Radio Access Network). Each of the multiple radio base stations eNBs forms a cell, which is an area in which communication service is provided to a radio terminal UE.

The radio terminal UE is a radio communication device held by a user, and is also referred to a user device. The radio terminal UE is connected to the radio base station eNB with the highest received power (RSRP: Reference Signal Received Power) of a radio signal among the multiple radio base stations eNBs. Note that the reception quality index is not limited to the RSRP. Another reception quality index, such as an SNR (Signal to Noise ratio), may be used.

The respective radio base stations eNBs are communicable with one another through X2 interfaces, which are logical communication paths through which inter-base station communication is provided. The respective multiple radio base stations eNBs are communicable, through S1 interfaces, with EPCs (Evolved Packet Core), specifically, MME (Mobility Management Entity)/S-GWs (Serving Gateway).

In radio communication between the radio base station eNB and the radio terminal UE, an OFDMA (Orthogonal Frequency Division Multiple Access) system and an SC-FDMA (Single-Carrier Frequency Division Multiple Access) system are applied as a multiplex system in a downlink and as a multiplex system in an uplink, respectively. Furthermore, an FDD (Frequency Division Duplex) system or a TDD (Time Division Duplex) system is applied as a duplex operation system.

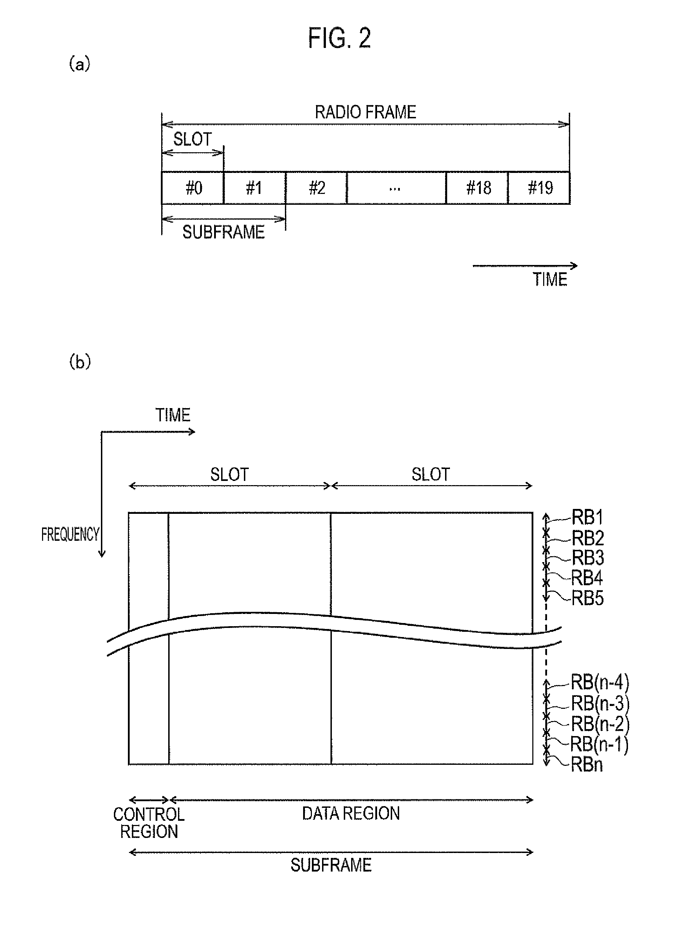

Fig. 2 (a) is a frame configuration diagram indicating a communication frame configuration when the FDD system is used.

As shown in Fig. 2(a), ten subframes arranged in the time domain constitute one radio frame, and each subframe includes two slots. The length of each subframe is 1 ms, and the length of each slot is 0.5 ms. Furthermore, each slot includes seven OFDM symbols in the time domain, and multiple resource blocks (RB) in the frequency domain.

Fig. 2 (b) is a diagram illustrating a configuration of a subframe in a downlink.

As shown in Fig. 2(b), the subframe includes two continuous slots. A section of three OFDM symbols at the maximum from the head of the first slot in the subframe is a control region which constitutes a radio resource used as a PDCCH through which control information is transmitted. The control information is allocation information in an uplink and in a downlink (so-called, scheduling information) or the like. Note that the control region may include, in addition to the PDCCH, a PCFICH (Physical Control Format Indicator Channel), a PHICH (Physical Hybrid Automatic Repeat Request Indicator Channel), or the like.

A section of the remaining OFDM symbols in the subframe is a data region which constitutes a radio resource used as a PDSCH (Physical Downlink Shared Channel) through which user data is transmitted. The PDSCH is configured to include at least one resource block.

The radio terminal UE decodes control information including allocation information by blind decoding. Decoding allocation information transmitted through the PDCCH allows the radio terminal UE to identify a resource block allocated as a PDSCH and a resource block allocated as a PUSCH.

### [First Embodiment]

Next, a first embodiment of the present invention will be described. In the first embodiment, (1) Configuration of Radio Communication System, (2) Detailed Configuration of Radio Communication System, (3) Concrete Example of PDCCH Interference Management, (4) Operation of Radio Communication System, and (5) Effects of First Embodiment will be described in this order.

### (1) Configuration of Radio Communication System

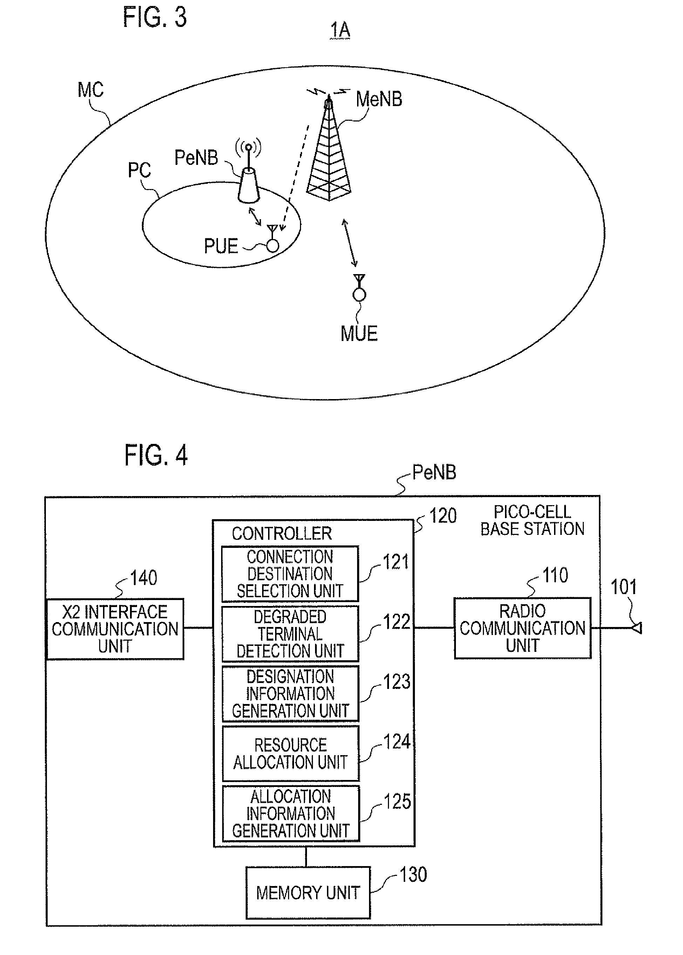

Fig. 3 is a schematic configuration diagram of a radio communication system 1A according to the first embodiment. A heterogeneous network is applied to the radio communication system 1A according to the first embodiment.

As shown in Fig. 3, the radio communication system 1A includes a macro-cell base station MeNB, a radio terminal MUE connected to the macro-cell base station MeNB, a pico-cell base station PeNB installed in a macro-cell MC formed by the macro-cell base station MeNB and located in the neighborhood of the macro-cell base station MeNB, and a radio terminal PUE connected to the pico-cell base station PeNB in a pico-cell PC formed by the pico-cell base station PeNB. Note that Fig. 3 shows only one radio terminal MUE and one radio terminal PUE, but actually both of the radio terminals MUEs and the radio terminals PUEs are present in plurality.

The pico-cell base station PeNB is a low power base station having a transmission power lower than the macro-cell base station MeNB. Accordingly, when a selection basis in which the radio terminal UE selects and connects to the radio base station eNB of the highest RSRP is employed, the coverage of the pico-cell base station PeNB (a range in which the radio terminal UE can be covered) may be reduced in the heterogeneous network. In particular, in a state where the pico-cell base station PeNB is located close to the macro-cell base station MeNB, the coverage of the pico-cell base station PeNB is extremely reduced. This prevents the pico-cell base station PeNB from being effectively used.

The following two methods can be used mainly as a method capable of expanding the coverage of the pico-cell base station PeNB without increasing the transmission power from the pico-cell base station PeNB.

The first method is a method in which a radio base station eNB of the smallest propagation loss (path loss) with a radio terminal UE is selected as a connection destination of the radio terminal UE, instead of selecting a radio base station eNB which transmits a radio signal of the highest RSRP as the connection destination of the radio terminal UE. Accordingly, for example, a radio base station eNB present closest to the radio terminal UE is selected as the connection destination. This makes it possible to expand the coverage of the pico-cell base station PeNB.

The second method is a method in which when a radio terminal UE can receive a radio signal from a macro-cell base station MeNB and a radio signal from a pico-cell base station PeNB, the RSRP of the pico-cell base station PeNB is compared with the RSRP of the macro-cell base station MeNB with a bias value added to the RSRP of the pico-cell base station PeNB. The addition of the bias value to the RSRP of the pico-cell base station PeNB increases a possibility that the RSRP after the offset will exceed the RSRP of the macro-cell base station MeNB. Therefore, the pico-cell base station PeNB is selected as a connection destination with priority. This makes is possible to expand the coverage of the pico-cell base station PeNB.

In the first embodiment, assuming that the coverage of the pico-cell base station PeNB is being expanded by the abovementioned second method.

The macro-cell base station MeNB transmits allocation information indicating resource blocks allocated to the radio terminal MUE through the PDCCH constituted using the control region. The pico-cell base station PeNB transmits allocation information indicating resource blocks allocated to the radio terminal PUE through the PDCCH constituted using the control region. Since frequency bands of these control regions overlap each other, the PDCCHs of the macro-cell base station MeNB and the pico-cell base station PeNB interfere with each other.

In a state where the coverage of the pico-cell base station PeNB is expanded, the radio terminal PUE connected to the pico-cell base station PeNB may have a higher received power from the macro-cell base station MeNB than a received power from the pico-cell base station PeNB. In this case, the PDCCH used by the pico-cell base station PeNB receives strong interference from the PDCCH used by the macro-cell base station MeNB. This prevents the radio terminal PUE from receiving (decoding) the allocation information.

Hereinafter, a PDCCH interference management between the macro-cell base station MeNB and the pico-cell base station PeNB will be mainly described.

### (2) Detailed Configuration of Radio Communication System

Next, a detailed configuration of the radio communication system 1A according to the first embodiment will be described in the order of (2.1) Configuration of Pico-cell Base Station PeNB, (2.2) Configuration of Macro-cell Base Station MeNB, and (2.3) Configuration of Radio Terminal MUE.

### (2.1) Configuration of Pico-cell Base Station PeNB

A configuration of the pico-cell base station PeNB according to the first embodiment will be described. Fig. 4 is a block diagram illustrating the configuration of the pico-cell base station PeNB according to the first embodiment.

As shown in Fig. 4, the pico-cell base station PeNB includes an antenna unit 101, a radio communication unit 110, a controller 120, a memory unit 130, and an X2 interface communication unit 140.

The radio communication unit 110 is configured to include, for example, a radio frequency (RF) circuit, abase band (BB) circuit, or the like, and transmits/receives a radio signal to and from the radio terminal PUE. Furthermore, the radio communication unit 110 modulates a transmission signal and demodulates a reception signal.

The controller 120 is configured to include, for example, a CPU, and controls various kinds of functions with which the pico-cell base station PeNB is provided. The memory unit 130 is configured to include, for example, a memory, and stores various pieces of information used for controlling the pico-cell base station PeNB and the like. The X2 interface communication unit 140 uses X2 interfaces to perform inter-base station communication to other radio base stations.

The controller 120 includes a connection destination selection unit 121, a degraded terminal detection unit 122, a designation information generation unit 123, a resource allocation unit 124, and an allocation information generation unit 125.

The connection destination selection unit 121 selects a next connection destination of the radio terminal PUE based on a measurement result report (measurement report) received by the radio communication unit 110 from the radio terminal PUE. When the radio terminal PUE receives reference signals from the macro-cell base station MeNB and the pico-cell base station PeNB, respectively, the measurement result report includes the RSRP of the macro-cell base station MeNB and the RSRP of the pico-cell base station PeNB. Before comparing the RSRP of the macro-cell base station MeNB with the RSRP of the pico-cell base station PeNB, the connection destination selection unit 121 adds a bias value to the RSRP of the pico-cell base station PeNB. When the biased RSRP is lower than the RSRP of the macro-cell base station MeNB, The connection destination selection unit 221 performs handover control so as to switch the connection destination of the radio terminal PUE to the macro-cell base station MeNB.

The degraded terminal detection unit 122 detects a degraded radio terminal PUE in a degraded radio state due to the interference from the macro-cell base station MeNB, out of the multiple radio terminals PUEs, based on measurement result reports (measurement reports) received from the multiple radio terminals PUEs connected to the pico-cell base station PeNB. The degraded radio terminal PUE is a radio terminal highly probable to fail to normally receive allocation information transmitted from the pico-cell base station PeNB through the PDCCH. For example, the degraded terminal detection unit 122 detects a radio terminal PUE in which the RSRP of the macro-cell base station MeNB exceeds a threshold value as the degraded radio terminal PUE.

The designation information generation unit 123 generates, when the degraded terminal detection unit 122 detects the degraded radio terminal PUE, designation information for designating a subframe in which the interference from the PDCCH is to be reduced. For example, a subframe number can be served as the designation information. The number of subframes in which the interference from the PDCCH is to be reduced may be one or a predetermined number. In other words, the number of subframes in which the interference from the PDCCH is to be reduced is limited. The X2 interface communication unit 140 transmits a PDCCH control message including the designation information generated by the designation information generation unit 123 to the macro-cell base station MeNB. In the first embodiment, the designation information generation unit 123 and the X2 interface communication unit 140 constitute a designation information transmitter.

The resource allocation unit 124 determines resource blocks to be allocated to the radio terminal PUE as a data channel (PDSCH, PUSCH) for each subframe. For example, the resource allocation unit 124 determines the resource blocks to be allocated to the radio terminal PUE, based on CQI (Channel Quality Information) which is feedback provided from the radio terminal PUE, using a scheduling algorithm such as Proportional Fairness. After the PDCCH control message being transmitted to the macro-cell base station MeNB, the resource allocation unit 124 determines resource blocks to be allocated to the radio terminal PUE for a subframe designated in the designation information.

The allocation information generation unit 125 generates allocation information indicating the resource blocks determined by the resource allocation unit 124. The radio communication unit 110 transmits the allocation information generated by the allocation information generation unit 125 to the radio terminal PUE through the PDCCH. The radio communication unit 110 transmits the allocation information (neighboring side allocation information) indicating the resource blocks allocated to the degraded radio terminal PUE through the PDCCH, in the subframe designated in the designation information. In the first embodiment, the allocation information generation unit 125 and the radio communication unit 110 constitute a neighboring side transmission processor.

### (2.2) Configuration of Macro-cell Base Station MeNB

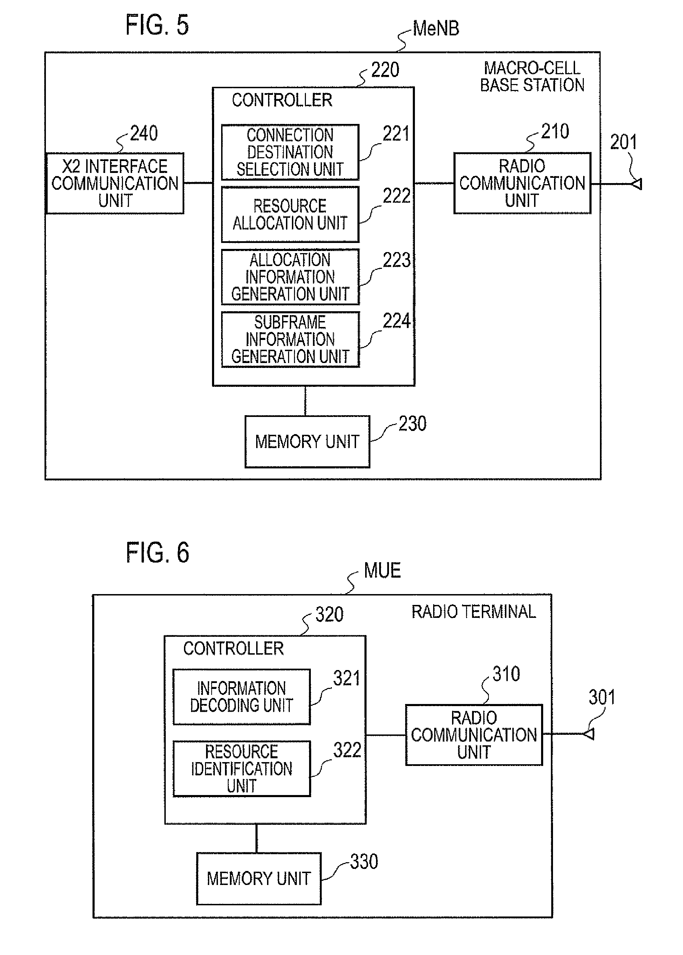

Next, a configuration of the macro-cell base station MeNB will be described. Fig. 5 is a block diagram illustrating a configuration of the macro-cell base station MeNB.

As shown in Fig. 5, the macro-cell base station MeNB includes an antenna unit 201, a radio communication unit 210, a controller 220, a memory unit 230, and an X2 interface communication unit 240.

The radio communication unit 110 is configured to include, for example, a radio frequency (RF) circuit, a base band (BB) circuit, or the like, and transmits/receives a radio signal to and from the radio terminal MUE. Furthermore, the radio communication unit 210 modulates a transmission signal and demodulates a reception signal.

The controller 220 is configured to include, for example, a CPU, and controls various kinds of functions with which the macro-cell base station MeNB is provided. The memory unit 230 is configured to include, for example, a memory, and stores various pieces of information used for controlling the macro-cell base station MeNB and the like.

The X2 interface communication unit 240 uses X2 interfaces to perform inter-base station communication to other radio base stations. In the first embodiment, the X2 interface communication unit 240 corresponds to a designation information receiver which receives a PDCCH control message including the designation information.

The controller 220 includes a connection destination selection unit 221, a resource allocation unit 222, an allocation information generation unit 223, and a subframe information generation unit 224.

The connection destination selection unit 221 selects a next connection destination of the radio terminal MUE based on a measurement result report (measurement report) received by the radio communication unit 210 from the radio terminal MUE. When the radio terminal MUE receives reference signals from the macro-cell base station MeNB and the pico-cell base station PeNB, respectively, the measurement result report includes the RSRP of the macro-cell base station MeNB and the RSRP of the pico-cell base station PeNB. Before comparing the RSRP of the macro-cell base station MeNB with the RSRP of the pico-cell base station PeNB, the connection destination selection unit 221 adds a bias value to the RSRP of the pico-cell base station PeNB. When the biased RSRP is higher than the RSRP of the macro-cell base station MeNB, the connection destination selection unit 221 performs handover control so as to switch the connection destination of the radio terminal MUE to the pico-cell base station PeNB.

The resource allocation unit 222 determines resource blocks to be allocated to the radio terminal MUE as a data channel (PDSCH, PUSCH) for each subframe. For example, the resource allocation unit 222 determines the resource blocks to be allocated to the radio terminal MUE, based on CQI which is feedback provided from the radio terminal MUE, using a scheduling algorithm such as Proportional Fairness.

The allocation information generation unit 223 generates allocation information indicating the resource blocks determined by the resource allocation unit 222. The radio communication unit 210 transmits the allocation information generated by the allocation information generation unit 223 to the radio terminal MUE through the PDCCH.

When receiving a PDCCH control message from the pico-cell base station PeNB, the subframe information generation unit 224 generates subframe information indicating a limited number of (one or a plurality number of) subframes designated in the designation information included in the PDCCH control message. In this case, the radio communication unit 210 transmits the allocation information generated by the allocation information generation unit 223 and the subframe information generated by the subframe information generation unit 224 through the PDCCH. In the first embodiment, the allocation information generation unit 223, the subframe information generation unit 224, and the radio communication unit 210 constitute a base station side transmission processor.

The subframe indicated by the subframe information is a subframe subsequent to the subframe to which the allocation information is transmitted, and to which allocation in accordance with the allocation information is applied.

### (2.3) Configuration of Radio Terminal MUE

Next, a configuration of the radio terminal MUE will be described. Fig. 6 is a block diagram illustrating the configuration of the radio terminal MUE.

As shown in Fig. 6, the radio terminal MUE includes an antenna unit 301, a radio communication unit 310, a controller 320, and a memory unit 330.

The radio communication unit 310 is configured to include, for example, a radio frequency (RF) circuit, a base band (BB) circuit, or the like, and transmits/receives a radio signal to and from the macro-cell base station MeNB. Furthermore, the radio communication unit 310 modulates a transmission signal and demodulates a reception signal.

The controller 320 is configured to include, for example, a CPU, and controls various kinds of functions with which the radio terminal MUE is provided. The memory unit 330 is configured to include, for example, a memory, and stores various pieces of information used for controlling the radio terminal MUE and the like.

The controller 320 includes an information decoding unit 321 and a resource identification unit 322. The information decoding unit 321 decodes the allocation information and the subframe information which are received by the radio communication unit 310 from the macro-cell base station MeNB. In the first embodiment, the radio communication unit 310 and the information decoding unit 321 constitute a terminal side reception processor.

The resource identification unit 322 identifies the resource blocks allocated based on the allocation information and the subframe information which are decoded by the information decoding unit 321, and identifies a limited number of subframes to which allocation in accordance with the allocation information is applied.

### (3) Concrete Example of PDCCH Interference Management

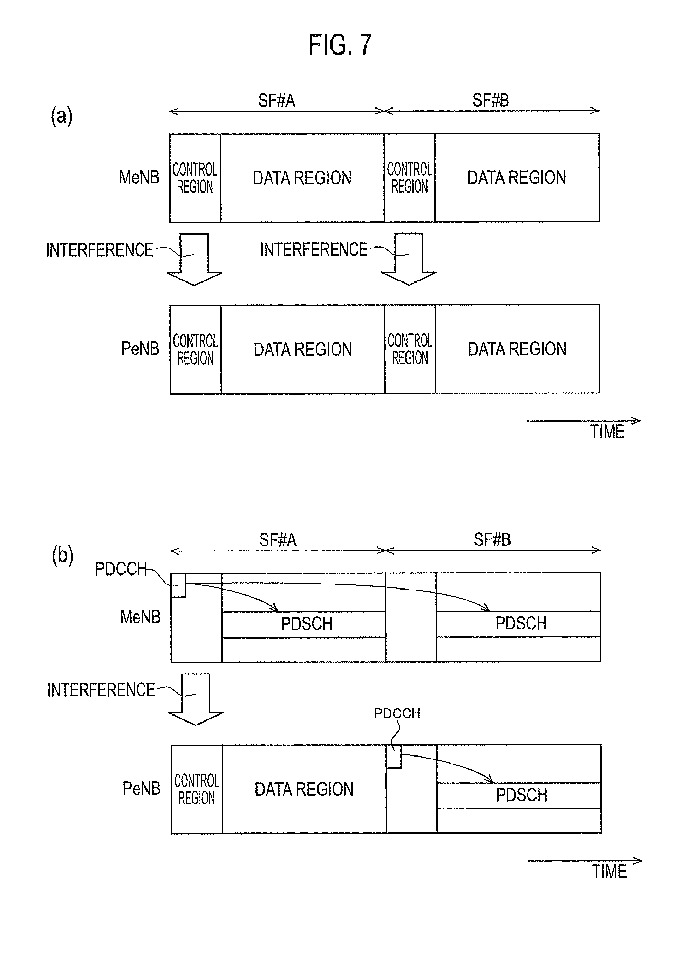

Next, concrete examples of a PDCCH interference management according to the first embodiment will be described. Fig. 7 is a diagram for explaining concrete examples of the PDCCH interference management according to the first embodiment.

Fig. 7 (a) is a diagram when a PDCCH interference management is not applied.

As shown in Fig. 7 (a), frequency bands of a control region where the macro-cell base station MeNB is used as a PDCCH and a control region where the pico-cell base station PeNB is used as a PDCCH are overlapped with each other. The PDCCH of the pico-cell base station PeNB receives interference from the PDCCH of the macro-cell base station MeNB.

Fig. 7(b) is a diagram when a PDCCH interference management is applied.

As shown in Fig. 7 (b), the radio communication unit 210 of the macro-cell base station MeNB transmits allocation information and subframe information in a subframe SF#A (first subframe) through the PDCCH. The allocation information indicates resource blocks allocated to the radio terminal MUE, and the subframe information indicates a subframe SF#B (second subframe) which is a subframe subsequent to the subframe SF#A and to which allocation in accordance with the allocation information is applied.

The radio communication unit 310 of the radio terminal MUE receives the allocation information and the subframe information from the macro-cell base station MeNB through the PDCCH, in the subframe SF#A. The information decoding unit 321 of the radio terminal MUE decodes the allocation information and the subframe information which are received by the radio communication unit 310. The resource identification unit 322 of the radio terminal MUE identifies the resource blocks allocated to each of the subframes SF#A and SF#B based on the allocation information and the subframe information which are decoded by the information decoding unit 321. Specifically, the resource identification unit 322 determines that resource blocks having the same frequencies as resource blocks allocated to the subframe SF#A is allocated to the subframe SF#B indicated by the subframe information.

With this method, one piece of allocation information can be applied to multiple subframes. This leads to omission of transmission/reception of the allocation information between the macro-cell base station MeNB and the radio terminal MUE through the PDCCH in the subframe SF#B. Accordingly, the pico-cell base station PeNB located around the macro-cell base station MeNB receives less interference from the PDCCH of the macro-cell base station MeNB in the subframe SF#B.

Meanwhile, the radio communication unit 110 of the pico-cell base station PeNB transmits allocation information indicating resource blocks allocated to the degraded radio terminal PUE, in the subframe SF#B through the PDCCH. With this manner, the degraded radio terminal PUE can normally receive the allocation information. This allows continuous radio communication between the pico-cell base station PeNB and the degraded radio terminal PUE.

The example above is based on the assumption that the macro-cell base station MeNB makes a control region blank without using PDCCH at all in the subframe SF#B. Alternatively, another employable method is to lower the use rate of the PDCCH in the subframe SF#B (in other words, the rate of the PDCCH used in the control region) by the macro-cell base station MeNB permitting a part of the control region to be used. For example, the use rate of the PDCCH can be lowered with permission of the use of the control region for one OFDM symbol. When the use rate of the PDCCH is lowered with such a method, the pico-cell base station PeNB preferably allocates to the degraded radio terminal PUE a PDCCH resource corresponding to a portion of the control region which the macro-cell base station MeNB does not use or a subframe where the macro-cell base station MeNB lowers the use rate of the PDCCH.

Alternatively, the macro-cell base station MeNB and the radio terminal MUE may transmit and receive user data for different HARQ (Hybrid Automatic Repeat Request) processes, in the subframe SF#A and the subframe SF#B, respectively. In this case, the macro-cell base station MeNB transmits the control information on the different HARQs used in both the subframe SF#A and the subframe SF#B to the radio terminal MUE through the PDCCH in the subframe SF#A.

Alternatively, the macro-cell base station MeNB and the radio terminal MUE may transmit and receive user data for the same HARQ process in both of the subframe SF#A and the subframe SF#B. In this case, the macro-cell base station MeNB transmits the control information on the same HARQ used in both the subframe SF#A and the subframe SF#B to the radio terminal MUE through the PDCCH in the subframe SF#A.

### (4) Operation of Radio Communication System

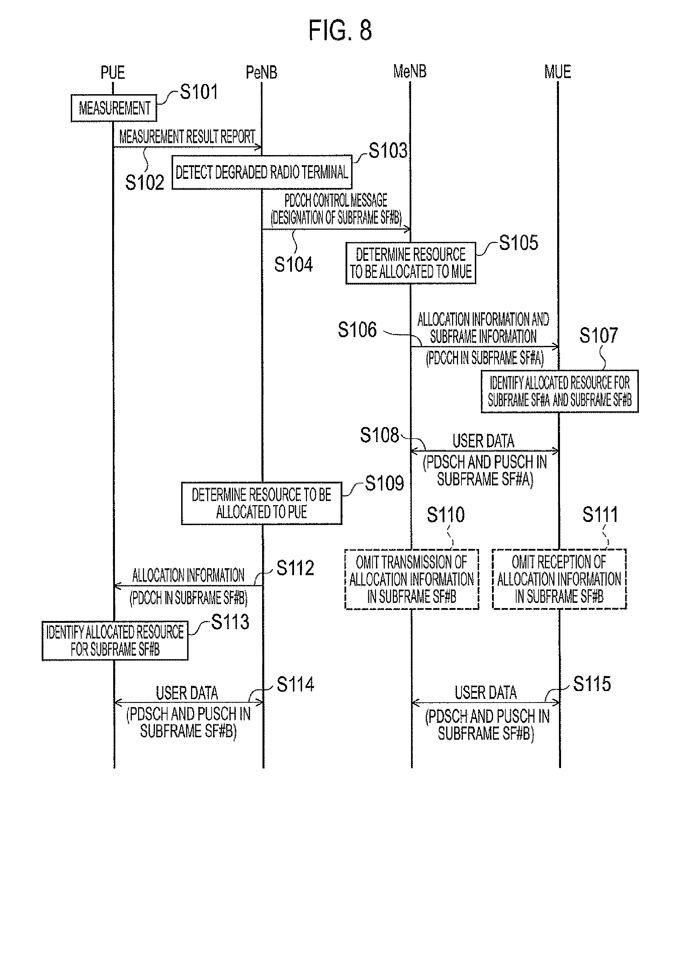

Fig. 8 is an operation sequence diagram illustrating an operation example of the radio communication system 1A according to the first embodiment. Here, a case where the radio communication system 1A performs the PDCCH interference management shown in Fig. 7 (b) will be described.

At Step S101, the radio terminal PUE measures RSRPs of the pico-cell base station PeNB and the macro-cell base station MeNB, respectively.

At Step S102, the radio terminal PUE transmits a measurement result report indicating the RSRPs measured at Step S101 to the pico-cell base station PeNB. The radio communication unit 110 of the pico-cell base station PeNB receives the measurement result report.

At Step S103, the degraded terminal detection unit 122 of the pico-cell base station PeNB detects a degraded radio terminal PUE based on the measurement result report received by the radio communication unit 110.

At Step S104, the designation information generation unit 123 of the pico-cell base station PeNB generates a designation information designating a subframe SF#B. The X2 interface communication unit 140 of the pico-cell base station PeNB then transmits a PDCCH control message including the designation information generated by the designation information generation unit 123 to the macro-cell base station MeNB. The X2 interface communication unit 240 of the macro-cell base station MeNB receives the PDCCH control message including the designation information.

At Step S105, the resource allocation unit 222 of the macro-cell base station MeNB determines resource blocks to be allocated to the radio terminal MUE for the subframe SF#A (and the subframe SF#B). The allocation information generation unit 223 of the macro-cell base station MeNB generates allocation information indicating the resource blocks determined by the resource allocation unit 222. The subframe information generation unit 224 of the macro-cell base station MeNB generates subframe information indicating the subframe SF#B based on the designation information.

At Step S106, the radio communication unit 210 of the macro-cell base station MeNB transmits the allocation information and the subframe information to the radio terminal MUE through the PDCCH in the subframe SF#A. The radio communication unit 310 of the radio terminal MUE receives the allocation information and the subframe information through the PDCCH in the subframe SF#A. The information decoding unit 321 of the radio terminal MUE decodes the allocation information and the subframe information which are received by the radio communication unit 310.

AT Step S107, the resource identification unit 322 of the radio terminal MUE identifies the resource blocks allocated to each of the subframe SF#A and the subframe SF#B based on the allocation information and the subframe information decoded by the information decoding unit 321.

At Step S108, the radio communication unit 210 of the macro-cell base station MeNB and the radio communication unit 310 of the radio terminal MUE transmit and receive user data using the allocated resource blocks for the subframe SF#A. Here, the user data may be transmitted and received not only in a downlink but also in an uplink.

At Step S109, the resource allocation unit 124 of the pico-cell base station PeNB determines resource blocks to be allocated to the degraded radio terminal PUE for the subframe SF#B. The allocation information generation unit 125 of the pico-cell base station PeNB generates allocation information indicating the resource blocks determined by the resource allocation unit 124.

At Step S110, the allocation information generation unit 223 and the radio communication unit 210 of the macro-cell base station MeNB omit transmission processing of the allocation information to the radio terminal MUE in the subframe SF#B. Furthermore, at Step S111, the radio communication unit 310 and the information decoding unit 321 of the pico-cell base station PeNB omit reception processing of the allocation information in the subframe SF#B.

At Step S112, the radio communication unit 110 of the pico-cell base station PeNB transmits the allocation information to the degraded radio terminal PUE through the PDCCH in the subframe SF#B. The degraded radio terminal PUE receives the allocation information through the PDCCH in the subframe SF#B, and decodes the received allocation information.

AT Step S113, the degraded radio terminal PUE identifies allocated resource blocks for the subframe SF#B based on the decoded allocation information.

At Step S114, the pico-cell base station PeNB and the degraded radio terminal PUE transmit and receive user data using the allocated resource blocks for the subframe SF#B. Here, the user data may be transmitted and received not only in a downlink but also in an uplink.

At Step S115, the macro-cell base station MeNB and the radio terminal MUE transmit and receive user data using the allocated resource blocks for the subframe SF#B. Here, the user data may be transmitted and received not only in a downlink but also in an uplink.

### (5) Effects of First Embodiment

As explained above, according to the first embodiment, one piece of allocation information can be applied to multiple subframes. This leads to omission of transmission/reception of the allocation information between the macro-cell base station MeNB and the radio terminal MUE through the PDCCH in the subframe SF#B. Accordingly, the pico-cell base station PeNB receives decreased interference from the PDCCH of the macro-cell base station MeNB, in the subframe SF#B. As a result, the PDCCH inter-base station interference can be reduced.

In the first embodiment, the subframe indicated by the subframe information to be transmitted in the subframe SF#A is the subframe SF#B which is subsequent to the subframe SF#A. The allocation information transmitted in the subframe SF#A generally indicates resource blocks in a good radio state in the subframe SF#A. However, the radio state changes as time passes. Accordingly, if there is a large time interval between the subframe SF#A and a subframe indicated by subframe information transmitted in the subframe SF#A, the resource blocks in the subframe indicated by the subframe information may be sometimes in the degraded radio state. As a result, designation of at least the subframe SF#B that is a subframe next to the subframe SF#A by the subframe information can enhance a possibility that the radio terminal MUE can use resource blocks in a good radio state in the subframe SF#B.

In the first embodiment, the pico-cell base station PeNB transmits designation information for designating the subframe SF#B to the macro-cell base station MeNB through inter-base station communication. The macro-cell base station MeNB transmits subframe information indicating the subframe SF#B designated in the designation information. With this manner, the pico-cell base station PeNB designates the subframe SF#B. Therefore, the pico-cell base station PeNB can play a main role to reduce interference in the subframe SF#B from the PDCCH of the macro-cell base station MeNB.

In the first embodiment, the pico-cell base station PeNB transmits neighboring side allocation information indicating resource blocks allocated to the degraded radio terminal PUE, in the subframe SF#B through the PDCCH. With this manner, the pico-cell base station PeNB transmits allocation information indicating the resource blocks allocated to the degraded radio terminal PUE in the subframe SF#B where the interference from the PDCCH of the macro-cell base station MeNB is reduced. Therefore, the degraded radio terminal PUE can normally receive the allocation information. This allows continuous radio communication between the pico-cell base station PeNB and the degraded radio terminal PUE.

In the first embodiment, when a degraded radio terminal PUE is detected, the pico-cell base station PeNB transmits the designation information to the macro-cell base station MeNB through inter-base station communication. With this manner, only when a degraded radio terminal PUE is detected, the designation information is transmitted to the macro-cell base station MeNB. Therefore, when no degraded radio terminal PUE is detected, the macro-cell base station MeNB can use the PDCCH without limitation.

In the first embodiment, the macro-cell base station MeNB and the radio terminal MUE transmit and receive data for different HARQ (Hybrid Automatic Repeat Request) processes in the subframe SF#A and the subframe SF#B, respectively. This allows concurrent execution of multiple HARQ processes.

Furthermore, in the first embodiment, the macro-cell base station MeNB and the radio terminal MUE transmit and receive user data for the same HARQ process, in each of the subframe SF#A and the subframe SF#B. This enables data transmission with a single Ack/Nack. Note that in the first embodiment, the macro-cell base station MeNB and the radio terminal MUE may transmit and receive data for the same HARQ process but for different Redundancy versions in the subframe SF#A and the subframe SF#B, respectively.

As described above, according to the first embodiment, even when a degraded radio terminal PUE turns into a state where the received power (RSRP) from the macro-cell base station MeNB is higher than the received power (RSRP) from the pico-cell base station PeNB as a result of the expansion of the coverage of the pico-cell base station PeNB, the degraded radio terminal PUE can normally receive the allocation information from the pico-cell base station PeNB.

Note that inter-base station interference of data channels (PDSCH and PUSCH) is not particularly explained above. However, the existing technology such as adaptive modulation control, HARQ, Inter-Cell Interference Coordination (ICIC) can cope with the interference of the data channels.

### [Second Embodiment]

In the first embodiment described above, it is difficult for the degraded radio terminal PUE to transmit and receive user data in subframes other than the subframe designated in the designation information (in other words, the subframe indicated by the subframe information). In a second embodiment, the pico-cell base station PeNB also transmits subframe information. This makes it possible to perform transmission/reception of user data in the subframes other than the subframe designated in the designation information.

Note that, in the second embodiment, the macro-cell base station MeNB and the radio terminal MUE are configured in the similar manner as in the first embodiment. Therefore, explanations of the configurations of the macro-cell base station MeNB and the radio terminal MUE are omitted.

### (1) Configuration of Pico-cell Base Station PeNB

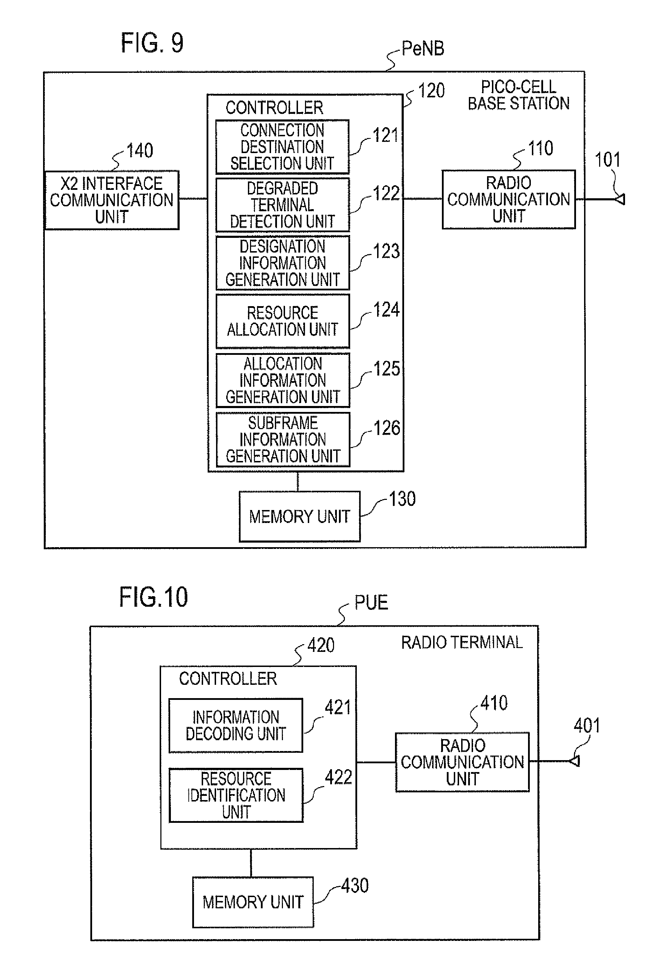

Fig. 9 is a block diagram illustrating a configuration of a pico-cell base station PeNB according to the second embodiment.

As shown in Fig. 9, the pico-cell base station PeNB according to the second embodiment is different from that in the first embodiment in that the controller 120 includes a subframe information generation unit 126. The subframe information generation unit 126 generates subframe information (neighboring side subframe information). When transmitting the allocation information to the radio terminal PUE in the subframe designated in the designation information (second subframe), the radio communication unit 110 transmits subframe information indicating a limited number of subframes (third subframe) which are subframes subsequent to the subframe and to which allocation in accordance with the allocation information is applied.

### (2) Configuration of Radio Terminal PUE

Next, a configuration of the radio terminal PUE will be described. Fig. 10 is a block diagram illustrating a configuration of the radio terminal PUE.

As shown in Fig. 10, the radio terminal PUE includes an antenna unit 401, a radio communication unit 410, a controller 420, and a memory unit 430.

The radio communication unit 410 is configured to include, for example, a radio frequency (RF) circuit, a base band (BB) circuit, or the like, and transmits/receives a radio signal to and from the pico-cell base station PeNB. Furthermore, the radio communication unit 410 modulates a transmission signal and demodulates a reception signal.

The controller 420 is configured to include, for example, a CPU, and controls various kinds of functions with which the radio terminal PUE is provided. The memory unit 430 is configured to include, for example, a memory, and stores various pieces of information used for controlling the radio terminal PUE and the like.

The controller 420 includes an information decoding unit 421 and a resource identification unit 422. The information decoding unit 421 decodes the allocation information and the subframe information which are received by the radio communication unit 410 from the pico-cell base station PeNB. In the second embodiment, the radio communication unit 410 and the information decoding unit 421 constitute a terminal side reception processor.

The resource identification unit 422 identifies resource blocks allocated based on the allocation information and the subframe information which are decoded by the information decoding unit 421, and identifies a limited number of subframes to which allocation in accordance with the allocation information is applied.

### (3) Concrete Example of PDCCH Interference Management

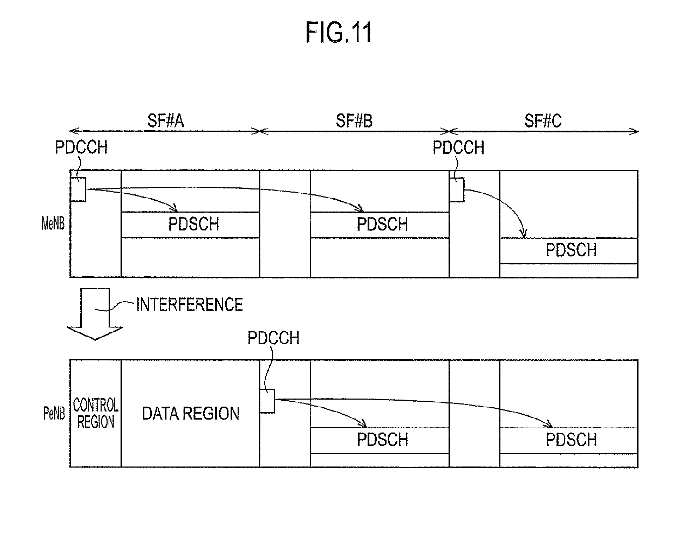

Next, a concrete example of a PDCCH interference management according to the second embodiment will be described. Fig. 11 is a diagram for explaining the concrete example of the PDCCH interference management according to the second embodiment. Here, an explanation is made mainly for points different from the first embodiment.

As shown in Fig. 11, the radio communication unit 210 of the macro-cell base station MeNB transmits allocation information and subframe information in a subframe SF#A (first subframe) through the PDCCH. The allocation information indicates resource blocks allocated to the radio terminal MUE, and the subframe information indicates a subframe SF#B (second subframe) which is a subframe subsequent to the subframe SF#A and to which allocation in accordance with the allocation information is applied.

The radio communication unit 110 of the radio terminal MUE receives the allocation information and the subframe information from the macro-cell base station MeNB through the PDCCH, in the subframe SF#A. The information decoding unit 321 of the radio terminal MUE decodes the allocation information and the subframe information which are received by the radio communication unit 110. The resource identification unit 322 of the radio terminal MUE identifies the allocated resource blocks for each of the subframes SF#A and SF#B based on the allocation information and the subframe information decoded by the information decoding unit 321.

Meanwhile, the radio communication unit 110 of the pico-cell base station PeNB transmits allocation information indicating the resource blocks allocated to a degraded radio terminal PUE and subframe information indicating a subframe SF#C (third subframe) which is a subframe subsequent to the subframe SF#B and to which allocation in accordance with the allocation information is applied, through the PDCCH in the subframe SF#B.

The radio communication unit 410 of the degraded radio terminal PUE receives the allocation information and the subframe information from the pico-cell base station PeNB, through the PDCCH in the subframe SF#B. The information decoding unit 421 of the degraded radio terminal PUE decodes the allocation information and the subframe information which are received by the radio communication unit 410. The resource identification unit 422 of the degraded radio terminal PUE identifies the resource block allocated to each of the subframes SF#B and SF#C based on the allocation information and the subframe information decoded by the information decoding unit 421.

Note that a case where one second subframe (the subframe SF#B) is present is exemplified here. Meanwhile, in a case where multiple second subframes are present, the pico-cell base station PeNB may transmit the subframe information in the last subframe out of the multiple second subframes.

### (4) Operation of Radio Communication System

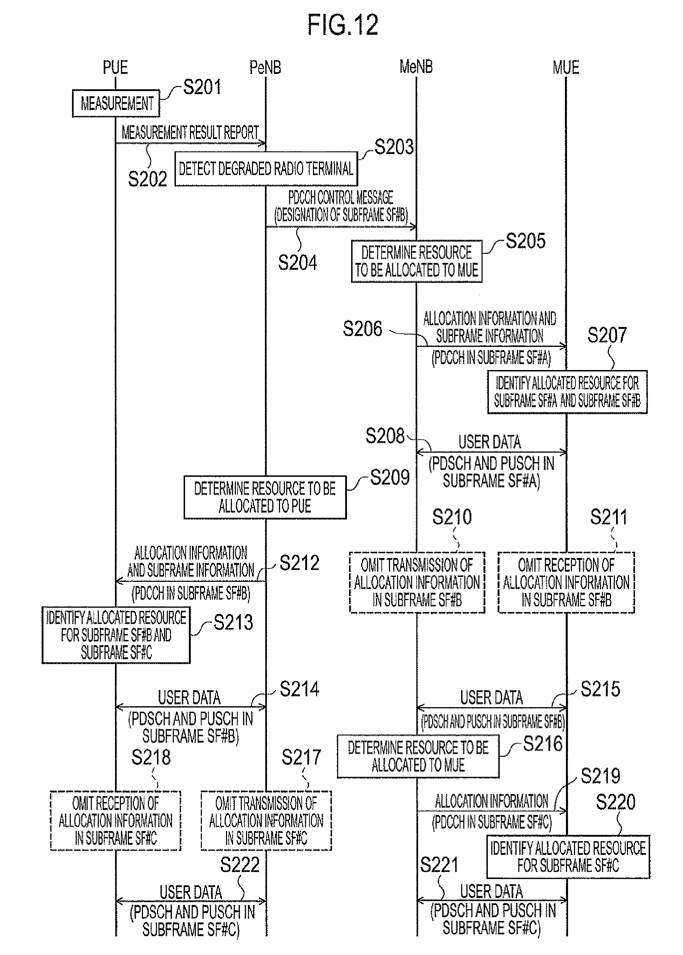

Fig. 12 is an operation sequence diagram illustrating an operation example of the radio communication system 1A according to the second embodiment. Here, a case where the radio communication system 1A according to the second embodiment performs a PDCCH interference management shown in Fig. 11 will be described. Note that because each processing at Step S201 to S208 is similarly to the processing at Step S201 to S208 which has been explained in the first embodiment, processing at Step S209 and the following steps will be described.

At Step S209, the resource allocation unit 124 of the pico-cell base station PeNB determines resource blocks to be allocated to the degraded radio terminal PUE for the subframe SF#B (and the subframe SF#C). The allocation information generation unit 125 of the pico-cell base station PeNB generates allocation information indicating the resource blocks determined by the resource allocation unit 124. The subframe information generation unit 126 of the pico-cell base station PeNB generates subframe information indicating the subframe SF#C.

At Step S210, the allocation inf ormation generation unit 223 and the radio communication unit 210 of the macro-cell base station MeNB omit transmission processing of the allocation information to the radio terminal MUE, in the subframe SF#B. Furthermore, at Step S211, the radio communication unit 310 and the information decoding unit 321 of the pico-cell base station PeNB omit reception processing of the allocation information, in the subframe SF#B.

At Step S212, the radio communication unit 110 of the pico-cell base station PeNB transmits the allocation information and the subframe information to the degraded radio terminal PUE through the PDCCH in the subframe SF#B. The radio communication unit 410 of the degraded radio terminal PUE receives the allocation information and the subframe information through the PDCCH in the subframe SF#B. The information decoding unit 421 of the degraded radio terminal PUE decodes the allocation information and the subframe information which are received by the radio communication unit 410.

At Step S213, the resource identification unit 422 of the degraded radio terminal PUE identifies the resource blocks allocated to each of the subframe SF#B and the subframe SF#C based on the allocation information and the subframe information which are decoded by the information decoding unit 421.

At Step S214, the pico-cell base station PeNB and the degraded radio terminal PUE transmit and receive user data using the allocated resource blocks for the subframe SF#B. Here, the user data may be transmitted and received not only in a downlink but also in an uplink.

At Step S215, the macro-cell base station MeNB and the radio terminal MUE transmit and receive user data using the allocated resource blocks for the subframe SF#B. Here, the user data may be transmitted and received not only in a downlink but also in an uplink.

At Step S216, the resource allocation unit 222 of the macro-cell base station MeNB determines resource blocks to be allocated to the radio terminal MUE for the subframe SF#C. The allocation information generation unit 223 of the macro-cell base station MeNB generates allocation information indicating the resource blocks determined by the resource allocation unit 222.

At Step S217, the allocation information generation unit 125 and the radio communication unit 110 of the pico-cell base station PeNB omit transmission processing of the allocation information to the degraded radio terminal PUE in the subframe SF#C. Furthermore, at Step S218, the radio communication unit 410 and the information decoding unit 421 of the degraded radio terminal PUE omit reception processing of the allocation information, in the subframe SF#C.

At Step S219, the radio communication unit 210 of the macro-cell base station MeNB transmits the allocation information to the radio terminal MUE through the PDCCH in the subframe SF#C. The radio communication unit 310 of the radio terminal MUE receives the allocation information through the PDCCH in the subframe SF#C. The information decoding unit 321 of the radio terminal MUE decodes the allocation information received by the radio communication unit 310.

At Step S220, the resource identification unit 322 of the radio terminal MUE identifies the allocated resource blocks for the subframe SF#C based on the allocation information decoded by the information decoding unit 321.

At Step S221, the radio communication unit 210 of the macro-cell base station MeNB and the radio communication unit 310 of the radio terminal MUE transmit and receive user data using the allocated resource blocks for the subframe SF#C. Here, the user data may be transmitted and received not only in a downlink but also in an uplink.

At Step S222, the pico-cell base station PeNB and the degraded radio terminal PUE transmit and receive user data using the allocated resource blocks for the subframe SF#C. Here, the user data may be transmitted and received not only in a downlink but also in an uplink.

### (5) Effect of Second Embodiment

As explained above, according to the second embodiment, when transmitting allocation information in the subframe SF#B, the pico-cell base station PeNB transmits subframe information indicating the subframe SF#C to which allocation in accordance with the allocation information is applied. This allows the pico-cell base station PeNB and the degraded radio terminal PUE to transmit and receive user data therebetween not only in the subframe SF#B but also in sub frame SF#C. Therefore, the throughput of the degraded radio terminal PUE can be improved.

### [Third Embodiment]

A third embodiment is an embodiment in which a PDCCH interference management between macro-cell base stations is performed. In the third embodiment, an explanation is made mainly for points different from the first embodiment and the second embodiment, and the overlapping explanation is omitted.

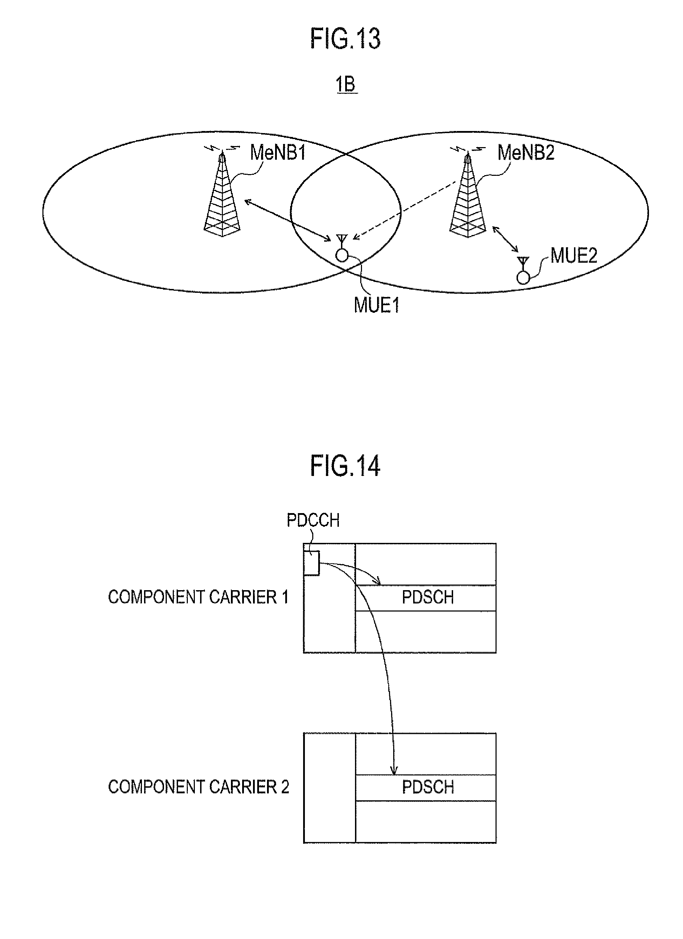

Fig. 13 is a schematic configuration diagram of a radio communication system 1B according to the third embodiment.

As shown in Fig. 13, the radio communication system 1B includes a macro-cell base station MeNB 1, a radio terminal MUE 1 connected to the macro-cell base station MeNB 1, a macro-cell base station MeNB 2 adjacent to the macro-cell base station MeNB 1, and a radio terminal MUE 2 connected to the macro-cell base station MeNB 2 in a cell formed by the macro-cell base station MeNB 2.

When the radio terminal MUE 1 to which the macro-cell base station MeNB 1 is connected is located around the cell edge, the radio terminal MUE 1 may not be able to normally receive the allocation information transmitted by the macro-cell base station MeNB 1 through the PDCCH, due to the interference from a PDCCH used by the macro-cell base station MeNB 2 adjacent to the macro-cell base station MeNB 1.

The PDCCH interference managements explained in the first embodiment and the second embodiment are effective for such a case. In other words, in the third embodiment, the macro-cell base station MeNB 1 may be configured similarly to the block configuration of the pico-cell base station PeNB explained in the first embodiment and the second embodiment, and the macro-cell base station MeNB 2 may be configured similarly to the block configuration of the macro-cell base station MeNB explained in the first embodiment and the second embodiment.

### [Other Embodiments]

As described above, the present invention has been described with the respective embodiments. However, it should not be understood that the indications and the drawings constituting a part of the disclosure limit the present invention. This disclosure allows a person skilled in the art to obviously understand various alternative embodiments, examples, and operation techniques.

In the embodiments described above, the explanations have been made for the cases without using a carrier aggregation technology in which multiple component carriers having different frequency bands are aggregated and used. However, as shown in Fig. 14, in the case of using the carrier aggregation technology, the information field used for the subframe information described above may be used as information for designating a component carrier. In the example of Fig. 14, information indicating that allocation information transmitted through the PDCCH is applied not only to a component carrier 1 but also to a component carrier 2 may be included in the information field used for the subframe information. Such a method results in the effective use of the information field used for subframe information.

The techniques of reducing PDCCH inter-base station interference between the macro-cell base station and the pico-cell base station have been explained in the first embodiment and in the second embodiment, and the technique of reducing PDCCH inter-base station interference between the macro-cell base stations has been explained in the third embodiment. However, the present invention is not limited the combinations of these base stations. The present invention can be applied to reduce PDCCH inter-base station interference between arbitrary adjacent base stations.

Furthermore, in the LTE Advanced, a relay node which is a radio base station constituting a backhaul through radio is expected to be employed, and an X2 interface is expected to be employed also in the relay node. Therefore, the relay node may be used as a radio base station according to the present invention.

In addition, in the embodiments described above, the LTE system has been explained. However, the present invention may be applied to other radio communication systems, such as a radio communication system based on WiMAX (IEEE 802.16).

It should be understood that the present invention includes various embodiments and the like which are not described herein. Therefore, the present invention is limited only by the appropriate inventive matters of the scope of claims based on this disclosure.

Note that the entire contents of Japanese Patent Application 2010-103645 (filed on April 28, 2010) are incorporated in the description of the present application by reference.

### INDUSTRIAL APPLICABILITY

As described above, the radio communication system, the radio base station, the radio terminal, and the radio communication method according to the present invention can reduce the inter-base station interference in a downlink control channel, and therefore are useful in radio communication such as mobile communication.

## Claims

1. A radio communication system configured to allow a radio base station and a radio terminal to perform radio communication with each other using a communication frame configuration in which subframes are arranged in a time domain, wherein
the radio base station comprises a base station side transmission processor configured to transmit allocation information and subframe information through a downlink control channel in a first subframe, the allocation information indicating a radio resource allocated to the radio terminal, the subframe information indicating a second subframe which is a subframe subsequent to the first subframe and to which allocation in accordance with the allocation information is applied, through a downlink control channel,
the radio terminal comprises:
a terminal side reception processor capable of receiving the allocation information and the subframe information from the radio base station through the downlink control channel in the first subframe; and
a resource identification unit configured to identify a radio resource allocated to each of the first subframe and the second subframe, based on the allocation information and the subframe information received by the terminal side reception processor, wherein
the terminal side reception processor omits reception processing of the allocation information in the second subframe when the subframe information is received.

2. The radio communication system according to claim 1, wherein the base station side transmission processor omits transmission processing of the allocation information in the second subframe.

3. The radio communication system according to claim 1, wherein the second subframe includes a subframe next to the first subframe.

4. The radio communication system according to claim 1, further comprising a neighboring base station that is another radio base station located around the radio base station, wherein
the neighboring base station comprises a designation information transmitter configured to transmit designation information for designating the second subframe to the radio base station through inter-base station communication,
the radio base station further comprises a designation information receiver configured to receive the designation information through the inter-base station communication, and
the base station side transmission processor transmits the subframe information indicating the second subframe that is designated in the designation information and is received by the designation information receiver.

5. The radio communication system according to claim 4, wherein the neighboring base station further comprises:
a detection unit configured to detect a degraded radio terminal from radio terminals connected to the neighboring base station, the degraded radio terminal being in a degraded radio state due to interference from the radio base station; and
a neighboring side transmission processor configured to transmit neighboring side allocation information in the second subframe through the downlink control channel, the neighboring side allocation information indicating a radio resource allocated to the degraded radio terminal.

6. The radio communication system according to claim 5, wherein when the detection unit detects the degraded radio terminal, the designation information transmitter transmits the designation information to the radio base station through the inter-base station communication.

7. The radio communication system according to claim 6, wherein when transmitting the neighboring side allocation information in the second subframe, the neighboring side transmission processor transmits neighboring side subframe information indicating a third subframe that is a subframe subsequent to the second subframe and to which allocation in accordance with the neighboring side allocation information is applied.

8. The radio communication system according to claim 1, wherein in a case of using a carrier aggregation technology in which multiple component carriers having different frequency bands are aggregated and used, the subframe information is used to designate a component carrier.

9. A radio base station configured to perform radio communication with a radio terminal using a communication frame configuration in which subframes are arranged in the time domain, comprising
a base station side transmission processor configured to transmit allocation information and subframe information in a first subframe through a downlink control channel, the allocation information indicating radio resources allocated to the radio terminal, the subframe information indicating a second subframe which is a subframe subsequent to the first subframe and to which allocation in accordance with the allocation information is applied.

10. A radio terminal configured to perform radio communication with a radio base station using a communication frame configuration in which subframes are arranged in the time domain, comprising
a terminal side reception processor capable of receiving allocation information and subframe information in a first subframe through a downlink control channel, the allocation information indicating a radio resource allocated by the radio base station, the subframe information indicating a second subframe which is a subframe subsequent to the first subframe and to which allocation in accordance with the allocation information is applied, wherein
the terminal side reception processor omits reception processing of the allocation information in the second subframe when the subframe information is received.

11. A radio base station configured to perform radio communication with a radio terminal using a communication frame configuration in which subframes are arranged in the time domain, comprising
a designation information transmitter configured to transmit designation information to another radio base station through inter-base station communication, the designation information being for designating a second subframe which is a subframe subsequent to a first subframe and to which allocation in accordance with allocation information for the first subframe is applied.

12. A radio communication method for performing radio communication between a radio base station and a radio terminal using a communication frame configuration in which subframes are arranged in the time domain, comprising the steps of:
transmitting allocation information and subframe information by the radio base station in a first subframe through a downlink control channel, the allocation information indicating a radio resource allocated to the radio terminal, the subframe information indicating a second subframe which is a subframe subsequent to the first subframe and to which allocation in accordance with the allocation information is applied;
receiving the allocation information and the subframe information from the radio base station by the radio terminal in the first subframe through the downlink control channel; and
omitting reception processing of the allocation information in the second subframe by the radio terminal based on the received subframe information.
